# EUROPÄISCHE PATENTSCHRIFT

(11) **EP 2 369 967 B1**
(45) Veröffentlichungstag und Bekanntmachung des Hinweises auf die Patenterteilung: **09.01.2013**
(21) Anmeldenummer: 09753043.0
(22) Anmeldetag: 04.11.2009
(51) Int. Cl.: A47J 37/06

(54) **MITTELARM ZUR AUFNAHME EINER KONTAKTGRILL- ODER BRATOBERPLATTE SOWIE KONTAKTGRILL- ODER BRATGERÄT MIT EINEM SOLCHEN MITTELARM**
MIDDLE ARM FOR MOUNTING A CONTACT GRILL OR ROASTING PLATE AND CONTACT GRILL OR ROASTING DEVICE WITH SUCH A MIDDLE ARM
BRAS CENTRAL DESTINÉ À MAINTENIR UNE PLAQUE SUPÉRIEURE DE GRIL DOUBLE OU UNE PLAQUE SUPÉRIEURE DE CUISSON ET GRIL DOUBLE OU APPAREIL DE CUISSON ÉQUIPÉ DE CE BRAS CENTRAL

(30) Priorität: 05.11.2008 DE 102008056474
(43) Veröffentlichungstag der Anmeldung: 05.10.2011
(73) Patentinhaber: H.H. Scholz KG, 22143 Hamburg (DE)
(72) Erfinder: SCHOLZ, Kay, 22143 Hamburg (DE); LANGGUTH, Otto, 22889 Tangstedt (DE); ANKLAM, Karsten, 22941 Bargteheide (DE)
(74) Vertreter: Stork Bamberger
(86) Internationale Anmeldenummer: PCT/EP2009/008052
(87) Internationale Veröffentlichungsnummer: WO 2010/052023

(56) Entgegenhaltungen:
- EP-A1- 0 662 299
- DE-C- 839 393
- FR-A1- 2 516 352

## Beschreibung

Die Erfindung betrifft einen Mittelarm zur Aufnahme einer Grill- oder Bratoberplatte, wobei der Mittelarm einen im Wesentlichen vertikalen Stützabschnitt und einen schwenkbar am vertikalen Stützabschnitt angeordneten Halteabschnitt, an dem die Grill- oder Bratoberplatte angeordnet ist, aufweist und die Schwenkachse des Halteabschnitts etwa im Schnittpunkt der Mittelachsen M₁ und M₂ des Halteabschnitts einerseits und des Stützabschnitts andererseits ausgebildet und angeordnet ist. Des Weiteren betrifft die Erfindung ein Kontaktgrill- oder Bratgerät mit mindestens einer Kontaktgrill- oder Bratoberplatte und eine Kontaktgrill- oder Bratunterplatte, wobei die oder jede Kontaktgrill- oder Bratoberplatte über einen Mittelarm schwenkbar an der Kontaktgrill- oder Bratunterplatte angeordnet ist.

Solche Mittelarme kommen im Bereich von Kontaktgrill- oder Bratgeräten mit mindestens zwei zur Anlage am Grill- oder Bratgut bestimmten Kontaktplatten zum Einsatz. Solche Kontaktgrill- oder Bratgeräte sind z.B. aus der EP 0 662 299 B1 bekannt und umfassen eine Kontaktgrill- oder Bratoberplatte und eine Kontaktgrill- oder Bratunterplatte, wobei die Kontaktgrill- oder Bratoberplatte über einen Mittelarm schwenkbar an der Kontaktgrillunterplatte angelenkt ist. Beiden Kontaktplatten ist eine die elektrische Schaltung aufnehmende Einheit mit entsprechenden Bedienelementen zugeordnet, wobei die Einheit üblicherweise unterhalb der beiden Kontaktplatten angeordnet ist. Der Mittelarm ist üblicherweise zweigeteilt. Anders ausgedrückt ist ein Mittelarmelement im Bereich der Kontaktgrill- oder Bratunterplatte fest angeordnet. Ein zweites Mittelarmelement ist schwenkbar an dem ersten Mittelarmelement angeordnet und trägt die Kontaktgrill- oder Bratoberplatte.

Die beiden Kontaktgrill- oder Bratplatten weisen eine gemeinsame Schwenkachse auf. In der Regel ist die Kontaktgrill- oder Bratunterplatte ortsfest ausgebildet und angeordnet, während die Kontaktgrill- oder Bratoberplatte schwenkbar zur Kontaktgrill- oder Bratunterplatte ausgebildet und angeordnet ist. Dazu ist das Mittelarmelement im Bereich der Kontaktgrill- oder Bratoberplatte, nämlich ein Halteabschnitt, über die Schwenkachse an dem Mittelarmelement, das der Kontaktgrill- oder Bratunterplatte zugeordnet ist, angeordnet. Der Stützabschnitt ist dazu im Wesentlichen linear ausgebildet, während der Halteabschnitt eine gekröpfte Form aufweist. Anders ausgedrückt ist der Haltabschnitt etwa L-förmig ausgebildet, wobei die Schwenkachse im Bereich des kurzen Schenkels angeordnet ist. Das bedeutet, dass die Schwenkachse bezogen auf die Mittelachse des Halteabschnitts außermittig angeordnet ist. Auch in Bezug auf die Mittelachse des Stützabschnitts ist die Schwenkachse außermittig angeordnet, nämlich beabstandet zur Mittelachse in Richtung der Kontaktgrill- oder Bratunterplatte. Diese dezentrale Anordnung der Schwenkachse in Bezug auf die Mittelachsen des Mittelarms weist jedoch den Nachteil auf, dass zum einen ein erheblicher Schwenkbereich entsteht, so dass ein solches Kontaktgrill- oder Bratgerät einen Freiraum benötigt, um die freie Schwenkbewegung zuzulassen. Anders ausgedrückt können bestehende Kontaktgrill- oder Bratgeräte nicht direkt an einer hinteren Begrenzung, nämlich üblicherweise einer Wand oder dergleichen, positioniert werden. Zum anderen wird die gesamte Konstruktion insbesondere des Mittelarms durch den durch die L-Form bedingten Hebelarm zur Schwenkachse instabil. Ein weiterer Nachteil besteht darin, dass zusätzliche Funktionen, wie beispielsweise Einrichtungen zur Gewichtsentlastung und/oder Einrichtungen zur Fixierung der Schwenkbewegung, nur mit sehr hohem konstruktivem Aufwand realisierbar sind.

Es ist daher Aufgabe der vorliegenden Erfindung, einen Mittelarm zu schaffen, der die aus dem Stand der Technik bekannten Nachteile beseitigt. Es ist des Weiteren Aufgabe der vorliegenden Erfindung, ein entsprechendes Kontaktgrill- oder Bratgerät vorzuschlagen.

Diese Aufgabe wird durch einen Mittelarm mit den eingangs genannten Merkmalen dadurch gelöst, dass der Stützabschnitt aus zwei Halbschalen gebildet ist, wobei eine Halbschale als Lagerstütze für die Schwenkachse und die andere Halbschale als Lagerabdeckung zum Fixieren der Schwenkachse ausgebildet ist. Durch die zentrale Anordnung der Schwenkachse wird auf überraschend einfache Weise eine kompakte und stabile Ausbildung des Mittelarms erreicht. Mit anderen Worten gewährleistet die zentrale Anordnung der Schwenkachse, dass der Schwenkbereich deutlich verkleinert und durch Vermeidung eines Hebelarms die Steifigkeit des Mittelarms erhöht wird. Des Weiteren unterstützt die zentrale Anordnung das Zentralisieren und Kombinieren von Zusatzfunktionen innerhalb des Kontaktgrill- oder Bratgeräts. Die Ausbildung des Stützabschnitts aus zwei Halbschalen ermöglicht die Verlagerung der Schwenkachse in Richtung der Kontaktgrill- oder Bratunterplatte unter Beibehaltung der zentralen Position bezüglich der Mittelachsen.

Eine zweckmäßige Weiterbildung der Erfindung zeichnet sich dadurch aus, dass die Schwenkachse in einem Innengehäuse des Halteabschnitts gelagert ist, wobei das Innengehäuse innerhalb eines Gehäuses des Halteabschnitts angeordnet ist. Durch die Anordnung eines ersten Gehäuses (Innengehäuse) in einem zweiten Gehäuse (Außengehäuse) und der Lagerung der Schwenkachse in dem Innengehäuse wird die Steifigkeit des Mittelarms deutlich erhöht, so dass auch Kontaktgrill- oder Bratoberplatten mit einem hohen Gewicht an dem Mittelarm aufnehmbar sind.

Vorzugsweise ist innerhalb des Stützabschnitts eine Einrichtung zur Gewichtsentlastung angeordnet, wobei die Einrichtung zur Gewichtsentlastung über Anlenkelemente an der Schwenkachse gelagert ist. Mit dieser erfindungsgemäßen Ausbildung werden mehrere Funktionen des Mittelarms, nämlich die eigentliche Schwenkbewegung und die Gewichtsentlastung auf einer gemeinsamen Schwenkachse realisiert, wodurch die Teileanzahl reduziert und die Konstruktion vereinfacht ist.

Vorteilhafterweise ist innerhalb des Halteabschnitts eine Einrichtung zur Gewichtsentlastung angeordnet, wobei die Einrichtung zur Gewichtsentlastung über Lagerarme an der Schwenkachse gelagert ist. Damit wird eine weitere Konzentration der Funktionalität des Mittelarms auf einer einzigen Schwenkachse erreicht, wodurch die Bauform des Mittelarms noch kompakter und zusätzlich stabilisiert wird.

Eine weitere bevorzugte Ausführungsform ist dadurch gekennzeichnet, dass auf der Schwenkachse eine Einrichtung zur Fixierung des Halteabschnitts gegenüber dem Stützabschnitt angeordnet ist. Das ermöglicht eine direkte und hebelarmfreie Kopplung der Einrichtung zur Fixierung mit der Schwenkachse. Anders ausgedrückt wirkt die Einrichtung zur Fixierung unmittelbar im Schwenkbereich, so dass eine exakte und stabile Fixierung gewährleistet ist.

Die Aufgabe wird auch durch ein Kontaktgrill- oder Bratgerät der eingangs genannten Art dadurch gelöst, dass der Mittelarm nach einem der Ansprüche 1 bis 7 ausgebildet ist. Die sich daraus ergebenden Vorteile wurden bereits im Zusammenhang mit dem Mittelarm beschrieben, so dass zur Vermeidung von Wiederholungen auf die entsprechenden Passagen verwiesen wird.

Weitere zweckmäßige und/oder vorteilhafte Merkmale und Weiterbildungen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine Explosionsdarstellung eines erfindungsgemäßen Mittelarms,
- Fig. 2: eine Explosionsdarstellung eines eine Kontaktgrill- oder Bratoberplatte tragenden Mittelarms,

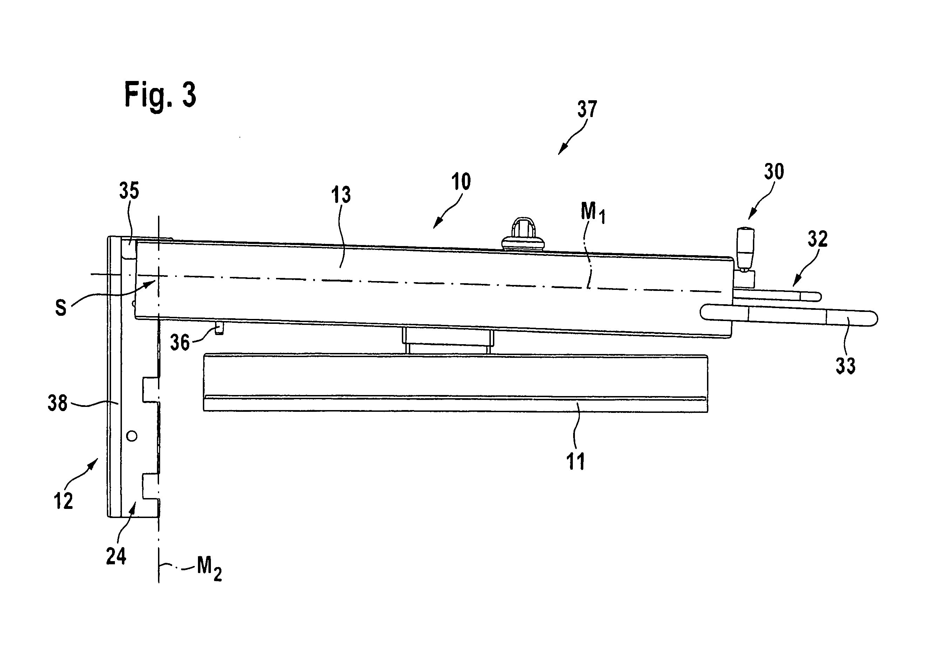

- Fig. 3: eine Seitenansicht eines Mittelarms, an dem eine Kontaktgrill- oder Bratoberplatte angeordnet ist,
- Fig. 4: eine perspektivische Darstellung des Schwenkbereichs des Mittelarms von schräg vorne,
- Fig. 5: eine perspektivische Darstellung des Schwenkbereichs von schräg hinten, und
- Fig. 6: eine Seitenansicht eines Kontaktgrill- oder Bratgeräts.

Der in den Figuren dargestellte Mittelarm dient als Nachrüstsatz bzw. in Verbindung mit einer Kontaktgrill- oder Bratoberplatte als eigenständiges Grill- oder Bratgerät und kann für sich alleine oder in Kombination mit einer Kontaktgrill- oder Bratunterplatte zur Bildung eines Kontaktgrill- oder Bratgerätes eingesetzt werden.

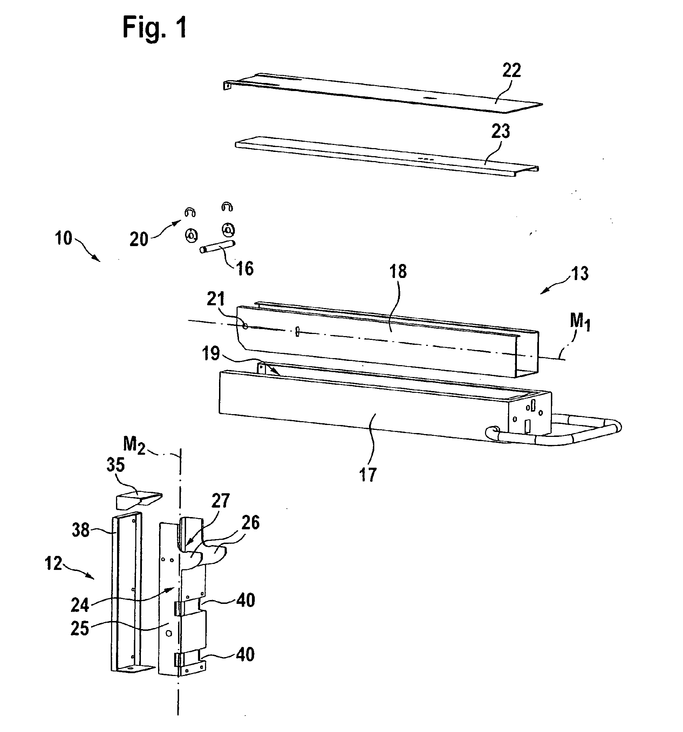

Die Figur 1 zeigt eine auseinander gezogene Darstellung eines Mittelarms 10, der zur Aufnahme einer Kontaktgrill- oder Bratoberplatte 11 ausgebildet und eingerichtet ist. Der Mittelarm 10 besteht im Wesentlichen aus einem vertikalen Stützabschnitt 12 und einem schwenkbar am Stützabschnitt 12 angeordneten Halteabschnitt 13. Die Bezeichnung "vertikaler Stützabschnitt 12" bedeutet, dass der Stützabschnitt 12 senkrecht zu einer üblicherweise durch einen Tisch, eine Unterlage oder dergleichen bzw. durch eine Kontaktgrill- oder Bratunterplatte 14 aufgespannten Ebene E ausgerichtet ist, wobei ausdrücklich auch eine leicht gegenüber der Senkrechten geneigte Ausrichtung eingeschlossen ist. An dem Halteabschnitt 13 ist die Kontaktgrill- oder Bratoberplatte 11 befestigbar.

Der Stützabschnitt 12 ist vorzugsweise ortsfest im Bereich eines Rahmens 14, einer Kontaktgrill- oder Bratunterplatte 15 oder dergleichen angeordnet. Relativ bewegbar zum Stützabschnitt 12, nämlich insbesondere aus einer (geöffneten) Befüllposition in eine (geschlossene) Grill- oder Bratposition und umgekehrt schwenkbar, ist der Halteabschnitt 13 angeordnet. Dazu sind der Stützabschnitt 12 und der Halteabschnitt 13 über eine Schwenkachse 16 miteinander verbunden. Die Schwenkachse 16 ist etwa im Schnittpunkt S der Mittelachse M₂ des Stützabschnitts 12 mit der Mittelachse M₁ des Halteabschnitts 13 ausgebildet und angeordnet. Konkret sind insbesondere die Mittelachsen M₁ und M₂ aus der Seitenansicht gemäß Figur 1 gemeint. Die Beschreibung "etwa im Schnittpunkt" bedeutet des Weiteren, dass nicht nur exakt der Schnittpunkt S als Position für die Schwenkachse 16 in Frage kommt, sondern ausdrücklich auch eine Position der Schwenkachse 16, die geringfügig neben dem Schnittpunkt S, nämlich im Bereich des Schnittpunktes S liegt.

Der Mittelarm 10 umfasst ein Gehäuse 17. Innerhalb des Gehäuses 17 ist ein Innengehäuse 18 angeordnet. Sowohl das Gehäuse 17 als auch das Innengehäuse 18 sind vorzugsweise ausschließlich linear langgestreckt und im Querschnitt quaderförmig ausgebildet. Selbstverständlich sind andere Ausbildungen und insbesondere Querschnittsformen möglich. Das Innengehäuse 18 ist gegenüber dem Gehäuse 17 deutlich schmaler ausgebildet, derart, dass der Innenraum 19 des Gehäuses 17 in mehrere Kammern unterteilt ist, die sich vorzugsweise in Längsrichtung des Halteabschnitts 13 erstrecken. Die Schwenkachse 16 ist vorzugsweise in bzw. am Innengehäuse 18 drehbar gelagert. Mittels geeigneter Sicherungsmittel 20, beispielsweise Sprengringen oder dergleichen, ist die Schwenkachse 16 in Lagersitzen 21, nämlich z.B. Bohrungen, des Innengehäuses 18 befestigt. Optional kann die Schwenkachse 16 aber auch im bzw. am Gehäuse 17 selbst gelagert sein. Optional ist das Gehäuse 17 mit einem Deckel 22 verschließbar, der als Klapp- oder Schiebedeckel oder in anderer geeigneter Weise ausgebildet sein kann. Besonders bevorzugt ist das Innengehäuse 18 zusätzlich mit einem separaten Deckel 23 verschließbar. Dadurch können mehrere, nämlich vorzugsweise drei unabhängige und voneinander gekapselte Kammern gebildet werden.

Der Stützabschnitt 12 ist aus zwei Halbschalen gebildet. Eine Halbschale ist als Lagerstütze 24 für die Schwenkachse 16 ausgebildet. Die z.B. in Figur 1 dargestellte Lagerstütze 24 weist einen vertikal gerichteten und sich linear erstreckenden Abschnitt 25 sowie zwei Tragarme 26 auf. Die Tragarme 26 bilden in einer zwischen sich und dem Abschnitt 25 gebildeten Kehle 27 einen Lagersitz für die Schwenkachse 16. Die Mittelachse M₂ bezieht sich dabei auf die durch den Abschnitt 25 und die Tragarme 26 gebildete bzw. definierte Gesamtbreite des Stützabschnitts 12. Weiterhin umfasst der Abschnitt 25 optional weitere Ausnehmungen 40, die zum Eingriff von Befestigungselementen, beispielsweise von Streben des Rahmens 14 oder von Komponenten der Kontaktgrill- oder Bratunterplatte 15, ausgebildet und eingerichtet sind. Nicht dargestellt aber zum Stützabschnitt 12 gehörig ist die zweite Halbschale, die als Lagerabdeckung zu Fixieren der Schwenkachse 16 ausgebildet und eingerichtet ist. Selbstverständlich sind auch andere die Schwenkachse 16 aufnehmende Komponenten einsetzbar. Entscheidend ist die Ausbildung bzw. Anordnung der Lagersitze für die Schwenkachse 16 auf der Mittelachse M₂ oder mit geringen Abweichungen davon direkt daneben.

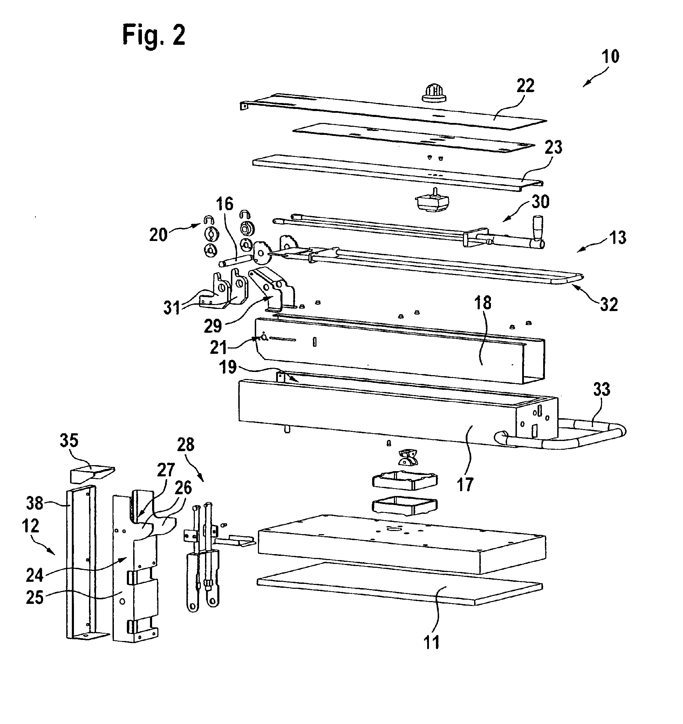

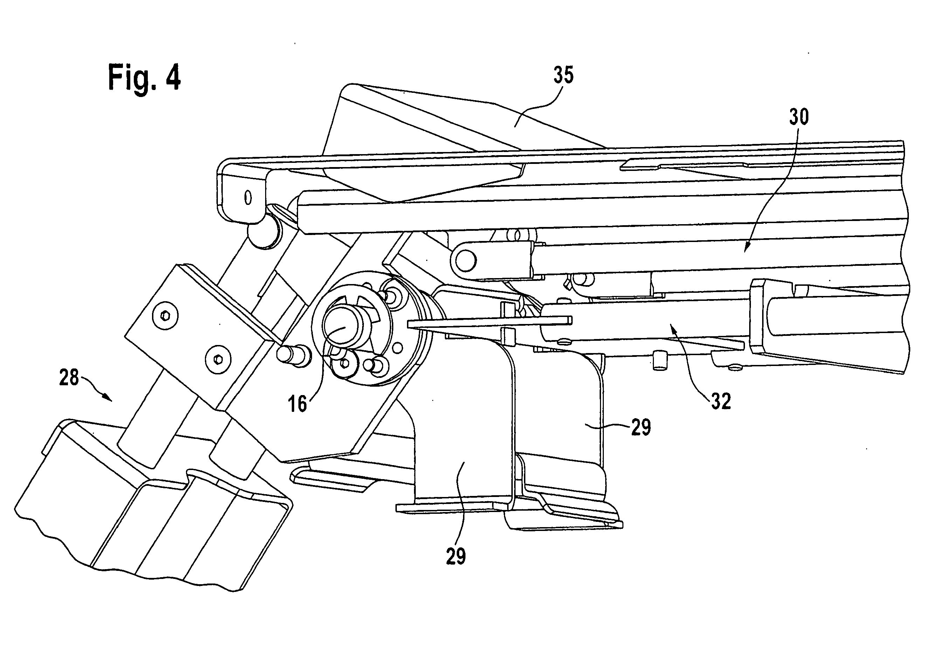

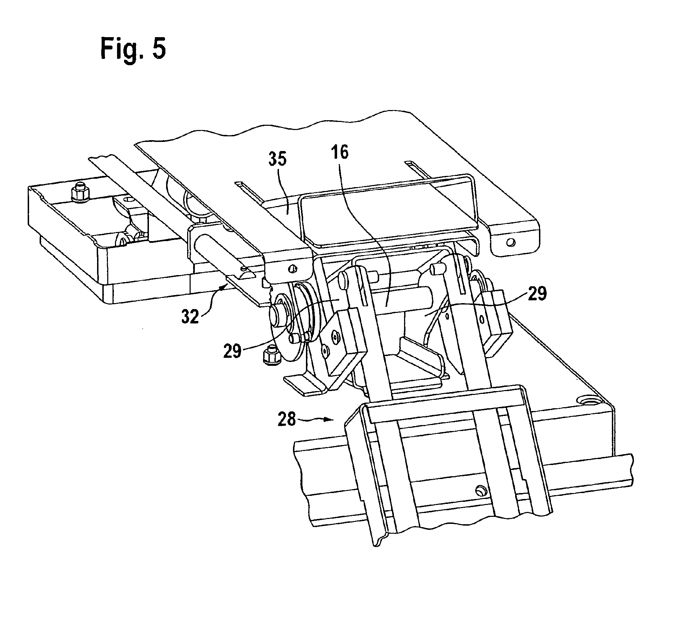

Wie der Figur 2 zu entnehmen ist, kann der erfindungsgemäße Mittelarm 10 des Weiteren eine Einrichtung 28 zur Gewichtsentlastung aufweisen, wobei die Einrichtung 28 zur Gewichtsentlastung innerhalb des Stützabschnitts 12 angeordnet und über Anlenkelemente 29 an der Schwenkachse 16 gelagert ist. Die Lagerstütze 24 des Stützabschnitts 12 kann dann mit einer Abdeckung 38 geschlossen werden. Eine weitere Option sieht vor, dass innerhalb des Halteabschnitts 13 ebenfalls eine Einrichtung 30 zur Gewichtsentlastung angeordnet ist, wobei die Einrichtung 30 zur Gewichtsentlastung über Lagerarme 31 an der Schwenkachse 16 gelagert ist. Auf der Schwenkachse 16 kann weiterhin eine Einrichtung 32 zur Fixierung des Halteabschnitts 13 gegenüber dem Stützabschnitt 12 in kundenspezifischen Raststellungen angeordnet sein. Die Zusammenlegung diverser Funktionen, nämlich insbesondere der Einrichtungen 28 und 30 zur Gewichtsentlastung sowie der Einrichtung 32 zur Fixierung geht auch aus den Figuren 4 und 5 hervor.

Dem Halteabschnitt 13 ist ein Griff 33 oder dergleichen zum Ausüben der Schwenkbewegung zugeordnet, der vorzugsweise im Bereich der Stirnseite des Halteabschnitts 13 angeordnet ist. Andere Betätigungselemente und Anordnungen bzw. Positionierungen sind aber ebenfalls möglich.

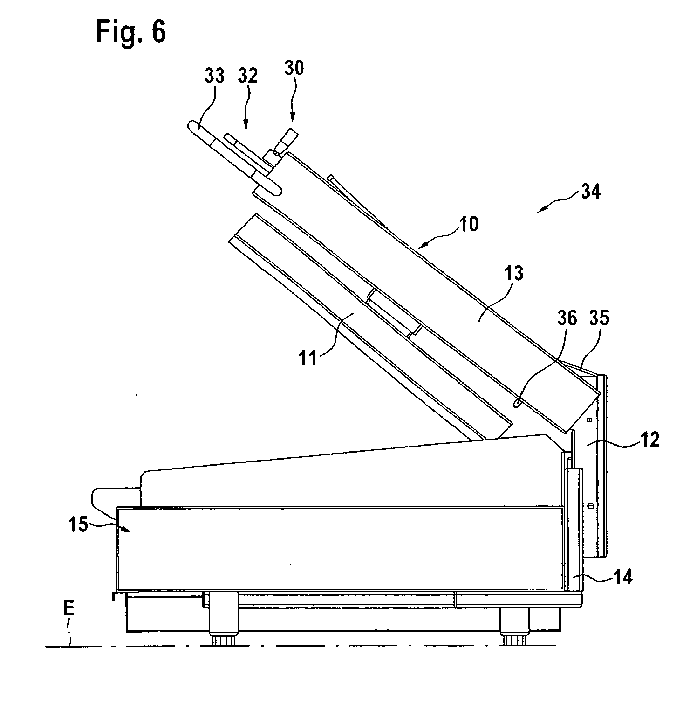

Der Figur 6 ist ein vollständiges Kontaktgrill- oder Bratgerät 34 mit einer Kontaktgrill- oder Bratoberplatte 11 und einer Kontaktgrill- oder Bratunterplatte 15 zu entnehmen, wobei die Kontaktgrill- oder Bratoberplatte 11 über den Mittelarm 10 an dem Rahmen 14 oder direkt an der Kontaktgrill- oder Bratunterplatte 15 schwenkbar befestigt ist. Der Schwenkbereich zwischen dem Halteabschnitt 13 und dem Stützabschnitt 12 ist vorzugsweise mit einer schwenkbar gelagerten Klappe 35 oder dergleichen abgedeckt. Optional kann zwischen dem Halteabschnitt 13 und der Kontaktgrill- oder Bratoberplatte 11 mindestens ein Abstandshalter 36 angeordnet sein. Der Mittelarm 10 zusammen mit der Kontaktgrill- oder Bratoberplatte 11 kann aber auch als eigenständiges Grill- oder Bratgerät 37, insbesondere als Nachrüstsatz, eingesetzt werden.

## Patentansprüche

1. Mittelarm (10) zur Aufnahme einer Grill- oder Bratoberplatte (11), wobei der Mittelarm (10) einen im Wesentlichen vertikalen Stützabschnitt (12) und einen schwenkbar am vertikalen Stützabschnitt (12) angeordneten Halteabschnitt (13), an dem die Grill- oder Bratoberplatte (11) angeordnet ist, aufweist und die Schwenkachse (16) des Halteabschnitts (13) etwa im Schnittpunkt S der Mittelachsen M₁ und M₂ des Halteabschnitts (13) einerseits und des Stützabschnitts (12) andererseits ausgebildet und angeordnet ist, **dadurch gekennzeichnet, dass** der Stützabschnitt (12) aus zwei Halbschalen gebildet ist, wobei eine Halbschale als Lagerstütze (24) für die Schwenkachse (16) und die andere Halbschale als Lagerabdeckung zum Fixieren der Schwenkachse (16) ausgebildet ist.

2. Mittelarm nach Anspruch 1, **dadurch gekennzeichnet, dass** die Schwenkachse (16) in einem Innengehäuse (18) des Halteabschnitts (13) gelagert ist, wobei das Innengehäuse (18) innerhalb eines Gehäuses (17) des Halteabschnitts (13) angeordnet ist.

3. Mittelarm nach Anspruch 2, **dadurch gekennzeichnet, dass** sowohl das Innengehäuse (18) als auch das Gehäuse (17) über einen separaten Deckel (23, 22) verfügen.

4. Mittelarm nach Anspruch 2 oder 3, **dadurch gekennzeichnet, dass** das Innengehäuse (18) den Innenraum (19) des Gehäuses (17) in mehrere in Längsrichtung des Mittelarms (10) gerichtete Kammern teilt.

5. Mittelarm nach einem der Ansprüche 1 bis 4, **dadurch gekennzeichnet, dass** innerhalb des Stützabschnitts (12) eine Einrichtung (28) zur Gewichtsentlastung angeordnet ist, wobei die Einrichtung (28) zur Gewichtsentlastung über Anlenkelemente (29) an der Schwenkachse (16) gelagert ist.

6. Mittelarm nach einem der Ansprüche 1 bis 5, **dadurch gekennzeichnet, dass** innerhalb des Halteabschnitts (13) eine Einrichtung (30) zur Gewichtsentlastung angeordnet ist, wobei die Einrichtung (30) zur Gewichtsentlastung über Lagerarme (31) an der Schwenkachse (16) gelagert ist.

7. Mittelarm nach einem der Ansprüche 1 bis 6, **dadurch gekennzeichnet, dass** auf der Schwenkachse (16) eine Einrichtung (32) zur Fixierung des Halteabschnitts (13) gegenüber dem Stützabschnitt (12) angeordnet ist.

8. Kontaktgrill- oder Bratgerät (34) mit mindestens einer Kontaktgrill- oder Bratoberplatte (11) und eine Kontaktgrill- oder Bratunterplatte (15), wobei die oder jede Kontaktgrill- oder Bratoberplatte (11) über einen Mittelarm (10) schwenkbar an der Kontaktgrill- oder Bratunterplatte (15) angeordnet ist, **dadurch gekennzeichnet, dass** der Mittelarm (10) nach einem der Ansprüche 1 bis 7 ausgebildet ist.

## Claims

1. Centre arm (10) for holding an upper grilling or roasting plate (11), wherein the centre arm (10) has a substantially vertical supporting section (12) and a holding section (13) which is arranged pivotably on the vertical supporting section (12) and on which is arranged the upper grilling or roasting plate (11), and the pivot shaft (16) of the holding section (13) is formed and arranged approximately at the point of intersection S of the centre axes M1 and M2 of the holding section (13) on the one hand and the supporting section (12) on the other hand, **characterized in that** the supporting section (12) is composed of two half-shells, one half-shell being designed as a bearing support (24) for the pivot shaft (16) and the other half-shell being designed as a bearing cover for fixing the pivot shaft (16).

2. Centre arm according to claim 1, **characterised in that** the pivot shaft (16) is mounted in an inner housing (18) of the holding section (13), the inner housing (18) being arranged within a housing (17) of the holding section (13).

3. Centre arm according to claim 2, **characterised in that** both the inner housing (18) and the housing (17) have a separate cover (23, 22).

4. Centre arm according to claim 2 or 3, **characterised in that** the inner housing (18) divides the inner chamber (19) of the housing (17) into several chambers directed in the longitudinal direction of the centre arm (10).

5. Centre arm according to any one of claims 1 to 4, **characterised in that** within the supporting section (12) is arranged a device (28) for weight relief, the device (28) for weight relief being mounted by link elements (29) on the pivot shaft (16).

6. Centre arm according to any one of claims 1 to 5, **characterised in that** within the holding section (13) is arranged a device (30) for weight relief, the device (30) for weight relief being mounted by bearing arms (31) on the pivot shaft (16).

7. Centre arm according to any one of claims 1 to 6, **characterised in that** on the pivot shaft (16) is arranged a device (32) for fixing the holding section (13) relative to the supporting section (12).

8. Contact grilling or roasting device (34) having at least one upper contact grilling or roasting plate (11) and a lower contact grilling or roasting plate (15), the or each upper contact grilling or roasting plate (11) being arranged pivotably by a centre arm (10) on the lower contact grilling or roasting plate (15), **characterised in that** the centre arm (10) is designed according to any one of claims 1 to 7.

## Revendications

1. Bras central (10) destiné à recevoir une plaque supérieure de cuisson ou de grill (11), le bras central (10) comportant une portion de support (12) sensiblement vertical et une portion de retenue (13) qui est disposée sur la portion de support verticale (12) de façon à pouvoir pivoter et sur laquelle est disposée la plaque supérieure de cuisson ou de grill (11), et l'axe de pivotement (16) de la portion de retenue (13) étant conformé et disposé à peu près au point d'intersection S des lignes médianes M₁ et M₂ de la portion de retenue (13) d'une part et de la portion de support (12) d'autre part, **caractérisé en ce que** la portion de support (12) est formée de deux demi-coques, une demi-coque étant conformée en support de palier (24) destiné à l'axe de pivotement (16) et l'autre demi-coque étant conformée en capot de palier destiné à fixer l'axe de pivotement (16).

2. Bras central selon la revendication 1, **caractérisé en ce que** l'axe de pivotement (16) est logé dans un boîtier intérieur (13) de la portion de retenue (13), le boîtier intérieur (18) étant disposé à l'intérieur d'un boîtier (17) de la portion de retenue (13).

3. Bras central selon la revendication 2, **caractérisé en ce que** le boîtier intérieur (13) ainsi que le boîtier (17) disposent d'un couvercle séparé (23, 22).

4. Bras central selon la revendication 2 ou 3, **caractérisé en ce que** le boîtier intérieur (18) divise l'espace intérieur (19) du boîtier (17) en plusieurs chambres orientées dans la direction longitudinale du bras central (10).

5. Bras central selon l'une des revendications 1 à 4, **caractérisé en ce qu'**à l'intérieur de la portion de support (12) est disposé un mécanisme (28) d'équilibrage de poids, le mécanisme (28) d'équilibrage de poids étant monté sur l'axe de pivotement (16) par le biais d'éléments articulés (29).

6. Bras central selon l'une des revendications 1 à 5, **caractérisé en ce qu'**à l'intérieur de la portion de retenue (13) est disposé un mécanisme (30) d'équilibrage de poids, le mécanisme (30) d'équilibrage de poids étant monté sur l'axe de pivotement (16) par le biais de bras de palier (31).

7. Bras central selon l'une des revendications 1 à 6, **caractérisé en ce que** sur l'axe de pivotement (16) est disposé un mécanisme (32) de fixation de la portion de retenue (13) par rapport à la portion de support (12).

8. Appareil de cuisson ou de grill de contact comportant au moins une plaque supérieure de cuisson ou de grill de contact (11) et une plaque inférieure de cuisson ou de grill de contact (15), la ou chaque plaque supérieure de cuisson ou de grill de contact (11) étant disposée sur la plaque inférieure de cuisson ou de grill de contact (15) de façon à pouvoir pivoter par le biais d'un bras central (10), **caractérisé en ce que** le bras central (10) est conformé selon l'une des revendications 1 à 7.
